# EUROPÄISCHE PATENTSCHRIFT

(11) **EP 1 344 787 B1**
(45) Veröffentlichungstag und Bekanntmachung des Hinweises auf die Patenterteilung: **29.11.2006**
(21) Anmeldenummer: 03004366.5
(22) Anmeldetag: 03.03.2003
(51) Int. Cl.: C08G 18/54, C08J 9/14

(54) **Flammwidrig eingestellte Hartschaumstoffe**
Flame retardant rigid foams
Mousses ignifuges rigides

(30) Priorität: 15.03.2002 DE 10212117
(43) Veröffentlichungstag der Anmeldung: 17.09.2003
(73) Patentinhaber: Bayer MaterialScience AG, 51368 Leverkusen (DE)
(72) Erfinder: Albach, Rolf, Dr., 51061 Köln (DE); Brockelt, Michael, 51373 Leverkusen (DE); Cirujeda-Ranzenberger, Juan, Dr., 08022 Barcelona (ES)

(56) Entgegenhaltungen:
- US-A- 4 247 655
- US-A- 4 489 178
- US-A- 5 451 615
- DATABASE WPI Week 9904 Derwent Publications Ltd., London, GB; AN 1999-040750 XP002244895 "Preparation of Mannich-polyol" & JP 10 298258 A (ASAHI YUKAZAI), 10. November 1998 (1998-11-10)

## Beschreibung

Gegenstand der Erfindung sind Polyolformuliemngen auf Basis von aromatischen Aminopolyolen sowie die daraus hergestellten flammwidrig eingestellten Hartschaumstoffe.

Isocyanat-basierte Schaumstoffe werden verbreitet zur Dämmung von Gebäuden, Gebäudeteilen, Rohren, Gefäßen und vielem anderen gegen Kälte- oder Wärmeverlust, aber auch zur Versteifung von Bauteilen eingesetzt. Dabei ist zu berücksichtigen, dass solche Dämmmaterialien, vor allem dann, wenn sie im Bauwesen eingesetzt werden, bestimmte Eigenschaften bei Einwirkung einer Flamme aufweisen müssen. Diese Eigenschaften sind von Land zu Land verschieden. In der Bundesrepublik Deutschland ist hier die Flammausbreitung gemäß DIN 4102 maßgeblich. Um besonders gute Dämmwirkung zu erreichen, werden weltweit immer noch verbreitet Fluorchlorkohlenstoffe und Fluorchlorkohlenwasserstoffe als physikalische Treibmittel eingesetzt. Es zeigte sich jedoch, dass solche Stoffe wahrscheinlich eine erhebliche Gefahr für die lebensnotwendige atmosphärische Ozonschicht darstellen können. Eine Herausforderung des technischen Fortschrittes besteht darin, Schaumstoffe zur Verfügung zu stellen, bei denen diese Stoffe nicht mehr notwendig sind.

Eine Möglichkeit, die bereits weite Verbreitung gefunden hat, ist der ausschließliche Einsatz von Wasser als Treibmittel. Die Tatsache, dass das aus Wasser und Isocyanaten entstehende als Treibmittel wirkende Kohlendioxid schneller die Zellen des Schaumstoffes verlässt als Luft eindiffündiert, führt zu erheblicher Druckbeanspruchung des Schaumstoffes. Dies verlangt eine erhöhte Druckfestigkeit und damit meist unerwünscht erhöhte Dichten des Schaumstoffes. Die Verwendung anderer chemischer Treibmittel wie Carbamate oder Carbonsäuren haben den gleichen Nachteil. Die Verwendung von Ameisensäure oder Formiaten kann zudem zur Emission von giftigem Kohlenmonoxid führen.

Als alternative Treibmittel bieten sich die Fluorkohlenwasserstoffe an. Verbreitet ist die Verwendung von R134a, das aufgrund seines bei Raumtemperatur gasförmigen Aggregatzustandes und seiner geringen Löslichkeit in den üblichen zur Herstellung von Isocyanat-basierten Schaumstoffen eingesetzten Komponenten zu erheblichen Problemen bei der Handhabung und zu einer geringen Verbesserung gegenüber rein wassergetriebenen Schaumstoffen führt. Andere Fluorkohlenwasserstoffe zeichnen sich durch teilweise aufwendige Herstellungsverfahren aus. Mischungen dieser Treibmittel mit Polyolen können einen Flammpunkt unter 55°C haben, der die Handhabung nur unter Sicherheitsvorkehrungen zulässt.

Die Verwendung von tert-Butanol ist für die Herstellung von Integralschaumstoffen mit kompakter Randzone beschrieben. Test.-Butanol als Treibmittel hat den Nachteil, dass in Randbereichen und auf kalten Oberflächen die zur Freisetzung des Treibmittels notwendige Reaktionstemperatur nicht oder zu spät erreicht wird und damit die für die Dämmwirkung gewünschte niedrige Rohdichte nicht erhalten werden kann. Dies ist im Fall von Anwendungen im Freien, bei denen der Schaumstoff auf dem zu dämmenden oft kalten und nicht beheizbaren Bauteil aufgebracht wird, von besonderer Bedeutung. Auch tert-Butanol ist bei niedrigen Temperaturen entflammbar; außerdem kann der Zusatz von tert.-Butanol zu einem Flammpunkt des Polyols von unter 55°C führen.

Alkane haben aufgrund ihrer Preisgünstigkeit weite Verbreitung als Treibmittel gefunden. Der Nachteil auch dieser Produkte ist ihre Entflammbarkeit, die einmal Sicherheitsvorkehrungen bei der Verarbeitung notwendig macht, der zum anderen aber auch zu ungünstigerem Verhalten in verschiedenen normierten Tests auf Entflammbarkeit führt. Dies kann zum Teil dadurch ausgeglichen werden, dass den Schaumstoffen höhere Mengen an Flammschutzmitteln beigefügt werden. Dies hat jedoch nicht selten nachteilige Wirkungen auf andere Eigenschaften des Schaumstoffes.

Die Verwendung von Mannichbasen in Verbindung mit chloriertem, ozonzerstörendem Treibmittel und ohne Verwendung von Polyesterpolyolen für die Herstellung von PUR-Hartschaumstoffen geht aus BE-A 680691 hervor. Dort werden allerdings bevorzugt alkoxylierte Mannichbasen als Rohstoffe zur Herstellung von solchen Schaumstoffen eingesetzt. Die Verwendung von alkoxylierten Mannichbasen in Verbindung mit Polyesterpolyolen und ozonschädlichen Treibmitteln ist beispielsweise aus US-A 5 451 615 bekannt. Alkoxylierte Mannichbasen sind jedoch durch den zusätzlich erforderlichen Schritt der Alkoxylierung aufwendiger herzustellen.

US 4 489 178 A beschreibt die Herstellung von Polyurethan-Hartschaumstoffen mit verbesserter Flammwidrigkeit unter Verwendung von alkoxylierten Mannichbasen als alleinige oder als Teil der Polyolkomponente.

Aus EP 0 854 159 B1 ist ein Verfahren zur Herstellung von Polyurethanhartschaum mit geringer Rauchentwicklung bekannt.

Es wurde nun gefunden, dass sich bei Verwendung nicht-alkoxylierter Mannichbasen selbst dann, wenn die eingesetzte Polyolformulierung einen Flammpunkt unter 55°C aufweist, PUR-Schaumstoffe erhalten lassen, die günstigere Flammausbreitung zeigen als PUR-Schaumstoffe, die mit Mannichpolyolen (d. h. alkoxylierten Mannichbasen) oder Polyolen auf Basis aromatischer Amine, die heute z.B. zur Formulierung von Rohstoffen für Spritzschaum eingesetzt werden, hergestellt wurden. Die Aktivität ist höher und erlaubt, gegebenenfalls den Einsatz von Aminkatalysatoren zu verringern. Erstaunlicherweise kann zudem eine bessere Verträglichkeit zwischen dem Treibmittel und den anderen Komponenten des Polyols erreicht werden als bei Verwendung von alkoxyliertem aromatischen Amin und alkoxylierten Mannichbasen.

Gegenstand der Erfindung sind Polyurethan-Hartschaumstoffe, erhältlich durch Umsetzung
a) einer Isocyanatgruppen-haltigen Komponente, bevorzugt Polyisocyanaten oder Präpolymeren auf Basis von MDI oder TDI, besonders bevorzugt polymerem MDI, insbesondere polymerem MDI mit einer Viskosität von 80 bis 1200 mPas (25°C), mit
b) einer Komponente mit einem Flammpunkt nach DIN EN 22719 unter 55°C, enthaltend
   b1) einen oder mehrere gegenüber Isocyanaten inerte(n) Stoff(e) ohne ozonzerstörende Wirkung mit einem Siedepunkt von unter 100°C bevorzugt unter 50°C; bevorzugt sind C₃-C₆-Alkane wie Propan, Butan, Isobutan, iso- oder n-Pentan, Cyclopentan, Isohexan, C₁-C₄-Alkohole oder brennbare Fluorkohlenwasserstoffe wie R 152a oder R 365mfc sowie deren Mischungen mit unbrennbaren Treibmitteln, besonders bevorzugt C₅-Alkane oder C₅-Alkane im Gemisch mit C₂-C₄-Fluorkohlenwasserstoffen.
   b2) ein Umsetzungprodukt aus einer oder mehreren Verbindungen mit einem aromatischen Ring, bevorzugt einem Phenol oder Phenolether oder einem in meta- oder para-Stellung substituierten Phenol, wobei der Substituent bevorzugt ein Alkyl- oder Arylsubstituent ist, und einem oder mehreren Aldehyden und/oder Ketonen, bevorzugt Formaldehyd, und einem oder mehreren primären oder sekundären Aminen, bevorzugt Ethanolamin, Diethanolamin, Propanolamin, Dipropanolamin, Methylethanolamin oder Methylpropanolamin, wobei die OH-Zahl des Umsetzungsprodukts bevorzugt 300 bis 800 beträgt, sowie gegebenenfalls
   b3) eine oder mehrere Isocyanat-reaktive Komponenten, die Polyestergruppen enthalten, bevorzugt aromatische Polyesterpolyole mit OH-Zahlen von 100 bis 500, insbesondere 120 bis 350, sowie gegebenenfalls
   b4) eine oder mehrere gegenüber Isocyanaten reaktiver Verbindungen, die nicht Komponenten b2 oder b3 entsprechen, bevorzugt Polyalkylenglykole auf Basis von Propylenglykol, Ethylenglykol, Glycerin, Trimethylolpropan, Pentaerythrit, Neopentylglykol oder dessen bromierten Drivaten, Dibrombutendiol, Bisphenol A, Bisphenol F, Sucrose oder anderen Zuckern, Sorbitol oder anderen hydrierten Zuckern, Toluylendiamin, MDA, Ethylendiamin, Ammoniak, Alkanolaminen oder Alkylalkanolaminen, sowie gegebenenfalls
   b5) ein oder mehrere zur Herstellung von Schaumstoffen notwendige Additive - z.B. Schaumstabilisatoren, Katalysatoren, Emulgatoren, Wasser, Flammschutzmittel, Verzögerer, Verdünner etc.

In bevorzugten Ausführungsformen werden als Komponente b 1 Alkane oder Mischungen von Alkanen mit Fluorkohlenwasserstoffen, als Komponente b2 Mannichbasen auf Basis von Alkylphenol, Dialkanolamin und Formaldehyd, als Komponente b3 aromatische Polyestepolyole auf Basis von Terephthalsäure oder Phthalsäure/Diethylenglykol, gegebenenfalls mit geringeren Mengen an C₄-C₆ Dicarbonsäuren und Glyzerin oder TMP eingesetzt.

Komponente b enthält bevorzugt
- 0,5 bis 40 Gew.-%, besonders bevorzugt 3 bis 20 Gew.-% der Komponente b1,
- 5 bis 70 Gew.-%, besonders bevorzugt 10 bis 30 Gew.-% der Komponente b2,
- 5 bis 80 Gew.-%, besonders bevorzugt10 bis 60 Gew.-% der Komponente b3,
- 0 bis 60 Gew.-%, besonders bevorzugt 0 bis 25 Gew.-% der Komponente b4.

Bei der Umsetzung der Komponenten a und b wird bevorzugt ein Index (Verhältnis von Isocyanatgruppen zu gegenüber Isocyanat reaktiven Gruppen, multipliziert mit Faktor 100) von 100 bis 500, besonders bevorzugt 100 bis 140 sowie 175 bis 350 eingehalten. Bei der Herstellung der erfindungsgemäßen Polyurethan-Hartschaumstoffe wird das Treibmittel b1 entweder im Gemisch mit den übrigen Bestandteilen der Komponente b vorgelegt oder bei der Verschäumung in oder vor dem Mischaggregat in Polyol- oder Isocyanatkomponente, bevorzugt in die Polyolkomponente, mittels eines geeigneten Aggregats, z.B. eines Rührers oder Statikmischers, eingemischt.

### Beispiele

### Herstellung der Mannichbasen

p-Nonylphenol und Diethanolamin wurden gemeinsam auf 313 K erhitzt. Innerhalb von 20 Minuten wurden die angegebenen Mengen einer 31,9 %igen wässrigen Lösung von Formaldehyd zugegeben. Die Temperatur der Mischung wurde eine Stunde lang bei 313 K gehalten. Dann wurde für drei Stunden auf 353 K erhitzt. Nach Abkühlen auf 60°C wurde die Mischung unter vermindertem Druck (1 bis 4 mbar) entwässert. Schließlich wurde das Produkt auf die gewünschte OH-Zahl verdünnt. Zur Verdünnung wurden entweder ein handelsübliches Polyetherpolyole mit Trimethylolpropan gestartetes Polyetherpolyol mit einer OH-Zahl von 250 (Desmophen^{®} VP.PU 1657, Bayer AG) und/oder TCPP (Levagard^{®} PP, Bayer AG) eingesetzt. Die erhaltenen Produkte wurden über den Gehalt an Anhydrid-reaktiven Gruppen (OH-Zahl), den Stickstoffgehalt (Kjelldahl-Methode), den Wassergehalt nach Karl-Fischer, den pH-Wert und die Viskosität bei 298 K charakterisiert.

| **Mannichbase** | **BM1** | **BM2** | **BM3** | **BM4** | **BM5** | **BM6** |
|---|---|---|---|---|---|---|
| Nonylphenol [kg] | 2,2 | 1,65 | 1,0 | 1,1 | 1,0 | 1,1 |
| Diethanolamin [kg] | 1,575 | 1,38 | 0,83 | 0,79 | 0,83 | 0,79 |
| Formalin 31,9%ig [kg] | 1,41 | 1,31 | 0,75 | 0,705 | 0,75 | 0,705 |
| Desmophen^{®}VP.PU 1657 [kg] | | | 0,64 | 0,66 | | |
| Levagard^{®} PP [kg] | | | | | 0,64 | 0,66 |
| OH-Zahl (PSA) | 608 | 606 | 551 | 525 | 467 | 442 |
| pH-Wert | | | 10,2 | 10,3 | 9,8 | 9,8 |
| Wassergehalt [Gew.-%] | 0,02 | 0,01 | 0,01 | 0,01 | 0,03 | 0,04 |
| Stickstoffgehalt [Gew.-%] | 5,2 | 5,6 | 4,2 | 3,9 | 4,3 | 3,9 |
| Viskosität (298 K) [Pa.s] | 15,5 | 8,4 | 3,1 | 3,6 | 2,4 | 2,9 |

### Laborverschäumung

Als aromatisches Aminopolyol (AP) wurde in den Vergleichsexperimenten ein handelsübliches mit o-TDA Poly(oxyethylen/oxypropylen)polyol mit OH/NH-Zahl 460 (Desmophen^{®} VP.PU 1907, Bayer AG). Als Mannichpolyol (MP) wurde in den Vergleichsexperimenten ein handelsübliche propoxylierte Mannichbase auf Basis von Nonylphenol mit OH-Zahl 480 und einer Funktionalität von etwa 4 eingesetzt (Hoopol^{®} M-120, Hoocker SA). Als polymeres Isocyanat wurde handelsübliches polymeres MDI eingesetzt (Desmodur 44V20L, Bayer AG).

Polyol A enthielt 54,8 Gew.-% eines aromatischen Polyesterpolyols mit einem zahlenmittleren Molekulargewicht von 375 g/mol, 23,1 Gew.-% einer Mischung organischer Phosphate (Levagard^{®} TTP64, Bayer AG), 3,1 Gew.-% Schaumstabilisator (Tegostab^{®} B8450, Goldschmidt AG), 0,5 Gew.-% Wasser, 12 Gew.-% Glyzerin, 5,1 Gew.-% einer bromhaltigen hydroxyfunktionellen Komponente mit OH-Zahl 335 und einer Funktionalität von 3 (Ixol^{®} B251, Solvay AG), 0,6 Gew.-% eines wasserselektiven Aktivators (Niax^{®} A1) und 0,4 Gew.% Dibutylzinn-Anthranilat.

Polyol B enthielt 64,2 Gew.-% eines aromatischen Polyesterpolyols mit einem zahlenmittleren Molekulargewicht von 375 g/mol, 21,5 Gew.-% Trischlorpropylphosphat (Levagard^{®} PP, Bayer AG), 1,5 Gew.-% Schaumstabilisator (Tegostab^{®} B8455, Goldschmidt AG), 0,2 Gew.-% Desmorapid PV^{®} (überwiegend Pentamethyldiethylentriamin), 1,1 Gew.-% Wasser sowie 11,5 Gew.-% ethoxyliertes Trimethylolpropan mit einem zahlenmittleren Molekulargewicht von ca. 700 g/mol.

| **Beispiel** | **V1** | **V2** | **1** | **2** | **3** | **4** |
|---|---|---|---|---|---|---|
| Polyol A [Gew.-%] | 65,6 | 65,6 | 65,6 | 65,6 | 65,6 | 65,6 |
| AP [Gew.-%] | 27,0 | | | | | |
| MP [Gew.-%] | | 27,0 | | | | |
| BM6 [Gew.-%] | | | 27,0 | | | |
| BM5 [Gew.-%] | | | | 27,0 | | |
| BM3 [Gew.-%] | | | | | 27,0 | |
| BM4 [Gew.-%] | | | | | | 27,0 |
| Cyclopentan [Gew.-%] | 7,4 | 7,4 | 7,4 | 7,4 | 7,4 | 7,4 |
| Cyclopentan ist nach 2 h | emulgiert | separiert | klar gelöst | klar gelöst | klar gelöst | klar gelöst |
| Polyol-Mischung [Vol.-%] | 50 | 50 | 50 | 50 | 50 | 50 |
| Desmodur^{®} 44V20L [Vol.-%] | 50 | 50 | 50 | 50 | 50 | 50 |
| Rührzeit [s] | 8 | 8 | 8 | 8 | 8 | 8 |
| Liegezeit [s] | 15 | 15 | 11 | 13 | 13 | 13 |
| Abbindezeit [s] | 29 | 29 | 21 | 24 | 24 | 24 |
| Freie Rohdichte [kg/m³] | 42 | 43 | 45 | 45 | 44 | 43 |
| Oberfläche | zäh | Zäh | zäh | zäh | zäh | zäh |
| Flammhöhe nach DIN4102 Kantenbeflammung [cm] | 19-20 | 19-20 | 14-16 | 14-15 | 16-17 | 15-16 |
| Flammhöhe nach DIN4102 Flächenbeflammung [cm] | 19-20 | 19-20 | 14-16 | 15-16 | 16-17 | 15-18 |
| Zerstörte Probenlänge nach DIN4102 Kantenbeflammung [cm] | 11-12 | 11-11,5 | 9 | 9 | 10 | 9-10 |
| Zerstörte Probenlänge nach DIN4102 Flächenbeflammung [cm] | 11-12,5 | 11-12 | 10-11 | 10-11 | 11-12 | 10-11 |

| **Beispiel** | **V3** | **5** |
|---|---|---|
| Polyol B [Gew.-%] | 70 | 70 |
| MP[Gew.-%] | 22 | |
| BM6 [Gew.-%] | | 22 |
| n-Pentan/HFC245fa 2:1 [Gew.-%] | 8 | 8 |
| Polyol-Mischung [Gew.-%] | 32,5 | 32,5 |
| 25% Kaliumacetat in Diethylenglycol [Gew.-%] | 2,6 | 2,6 |
| Desmodur^{®} 44V20L [Gew.-%] | 64,9 | 64,9 |
| Index (100*mol NCO/mol OH) | 305 | 305 |
| Rührzeit [s] | 10 | 10 |
| Liegezeit [s] | 18 | 12 |
| Abbindezeit [s] | 42 | 25 |
| Aushärtezeit [s] | 44 | 28 |
| Freie Rohdichte [kg/m³] | 58 | 60 |
| Oberfläche | zäh | zäh |
| Flammhöhe nach DIN4102 Kantenbeflammung [cm] | 9-10 | 8-9 |
| Zerst. Länge nach DIN4102 Kantenbeflammung [cm] | 5-6 | 5-6 |

## Patentansprüche

1. Polyurethan-Hartschaumstoff, erhältlich durch Umsetzung
a) einer Isocyanatgruppen-haltigen Komponente mit
b) einer Komponente mit einem Flammpunkt nach DIN EN 22719 unter 55°C, enthaltend
b1) einen oder mehrere gegenüber Isocyanaten inerte(n) Stoff(e) ohne ozonzerstörende Wirkung mit einem Siedepunkt unter 100°C,
b2) ein Umsetzungprodukt aus einer oder mehreren Verbindungen mit einem aromatischen Ring, einem oder mehreren Aldehyden und/oder Ketonen und einem oder mehreren primären oder sekundären Aminen,
b3) gegebenenfalls eine oder mehrere Isocyanat-reaktive Komponenten, die Polyestergruppen enthalten,
b4) gegebenenfalls eine oder mehrere gegenüber Isocyanaten reaktiver Verbindungen, die nicht Komponenten b2 oder b3 entsprechen,
b5) gegebenenfalls ein oder mehrere zur Herstellung von Schaumstoffen notwendige Additive.

2. Polyol-Formulierung mit einem Flammpunkt nach DIN EN 22719 unter 55°C, enthaltend
b1) einen oder mehrere gegenüber Isocyanaten inerte(n) Stoff(e) ohne ozonzerstörende Wirkung mit einem Siedepunkt unter 100°C,
b2) ein Umsetzungprodukt aus einer oder mehreren Verbindungen mit einem aromatischen Ring, einem oder mehreren Aldehyden und/oder Ketonen und einem oder mehreren primären oder sekundären Aminen,
b3) gegebenenfalls eine oder mehrere Isocyanat-reaktive Komponenten, die Polyestergruppen enthalten,
b4) gegebenenfalls eine oder mehrere gegenüber Isocyanaten reaktive Verbindungen, die nicht Komponenten b2 oder b3 entsprechen,
b5) gegebenenfalls ein oder mehrere zur Herstellung von Schaumstoffen notwendige Additive.

## Claims

1. Polyurethane rigid foam obtainable by reaction of
a) an isocyanate group-containing component, with
b) a component having a flashpoint to DIN EN 22719 below 55°C, containing
b1) one or more substances which are inert toward isocyanates and do not have an ozone-destroying effect, with a boiling point below 100°C,
b2) a reaction product of one or more compounds with an aromatic ring, one or more aldehydes and/or ketones and one or more primary or secondary amines,
b3) optionally one or more isocyanate-reactive components which contain polyester groups,
b4) optionally one or more compounds which are capable of reacting with isocyanates and do not correspond to components b2 or b3,
b5) optionally one or more additives required for the production of foams.

2. Polyol formulation with a flashpoint to DIN EN 22719 below 55°C, containing
b1) one or more substances which are inert toward isocyanates and do not have an ozone-destroying effect, with a boiling point below 100°C,
b2) a reaction product of one or more compounds with an aromatic ring, one or more aldehydes and/or ketones and one or more primary or secondary amines,
b3) optionally one or more isocyanate-reactive components which contain polyester groups,
b4) optionally one or more compounds which are capable of reacting with isocyanates and do not correspond to components b2 or b3,
b5) optionally one or more additives required for the production of foams.

## Revendications

1. Mousse rigide de polyuréthanne obtenue par réaction de
a) un composant contenant des groupes isocyanate avec
b) un composant ayant un point d'inflammation inférieur à 55°C selon norme DIN EN 22719, et qui contient
b1) une ou plusieurs substances inertes à l'égard des isocyanates, n'attaquant pas l'ozone, et ayant un point d'ébullition inférieur à 100°C,
b2) un produit de réaction d'un ou plusieurs composés contenant un cycle aromatique, d'un ou plusieurs aldéhydes et/ou cétones et d'une ou plusieurs amines primaires ou secondaires,
b3) le cas échéant un ou plusieurs composants réactifs avec les isocyanates et contenant des groupes polyester,
b4) le cas échéant un ou plusieurs composés réactifs avec les isocyanates et autres que les composants b2 ou b3,
b5) le cas échéant un ou plusieurs additifs nécessaires pour la préparation des mousses.

2. Composition de polyols ayant un poids d'inflammation inférieur à 55°C selon norme DIN EN 22719, et qui contient
b1) une ou plusieurs substances inertes à l'égard des isocyanates, n'attaquant pas l'ozone et ayant un point d'ébullition inférieur à 100°C,
b2) un produit de réaction d'un ou plusieurs composés contenant un cycle aromatique, d'un ou plusieurs aldéhydes et/ou cétones et d'une ou plusieurs amines primaires ou secondaires,
b3) le cas échéant un ou plusieurs composants réactifs avec les isocyanates et contenant des groupes polyester,
b4) le cas échéant un ou plusieurs composés réactifs avec les isocyanates et autres que les composants b2 ou b3,
b5) le cas échéant un ou plusieurs additifs nécessaires pour la préparation des mousses.
